Europäisches Patentamt

(19) European Patent Office

Office européen des brevets

(11) Publication number: **0 336 553 B1**

(12) **EUROPEAN PATENT SPECIFICATION**

(45) Date of publication of patent specification :
21.11.91 Bulletin 91/47

(51) Int. Cl.⁵ : **B62D 6/02**

(21) Application number : 89301927.3

(22) Date of filing : 27.02.89

(54) A vehicle power assisted steering system.

(30) Priority : 17.03.88 GB 8806387

(43) Date of publication of application :
11.10.89 Bulletin 89/41

(45) Publication of the grant of the patent :
21.11.91 Bulletin 91/47

(84) Designated Contracting States :
DE FR GB IT

(56) References cited :
EP-A- 0 067 320
EP-A- 0 067 572
EP-A- 0 089 512
GB-A- 1 293 192

(56) References cited :
GB-A- 2 165 502
AUTOMOTIVE ENGINEER, vol. 11, no. 5,
October/November 1986, pages 30-31, Bury St.
Edmunds, Suffolk, GB; "Steering and suspension update"

(73) Proprietor : TRW CAM GEARS LIMITED
Old Church Road
Clevedon Avon BS21 6NJ (GB)

(72) Inventor : Adams, Frederick John
"Pelba" 27 Princes Road
Clevedon, Avon (GB)

(74) Representative : Walters, Frederick James et
al
Urquhart-Dykes & Lord 91 Wimpole Street
London W1M 8AH (GB)

EP 0 336 553 B1

# Description

## TECHNICAL FIELD & BACKGROUND ART

The present invention relates to a vehicle power assisted steering system, more particularly to such a system of the type known as speed proportional whereby the power assistance which is provided decreases as vehicle speed increases and conversely. Systems of the aforementioned type are known as comprising an hydraulic pump having a constant volume output which communicates with an open centre power assistance valve that is adjustable from a neutral condition in response to a steering input torque during a steering manoeuvre to control fluid flow from the pump to opposed chambers of a ram which provides power assistance to assist the manoeuvre. The power assistance valve has valve members relative displacement (typically rotational displacement) between which from the neutral condition and in response to a steering input torque directs hydraulic fluid to actuate the ram for power assistance. In the neutral condition of the open centre power assistance valve, the valve members provide inter-communication between the pump, the chambers of the ram and the reservoir and these valve members are biased to the neutral condition by a biasing means. In the case of relatively rotational valve members the biasing means is usually either or both of a torsion rod or C-spring component which reacts between the valve members, for example in the manner disclosed in our British Patent Specification No. 2,165,502. Where the biasing means is both a torsion rod and a C-spring component it is recognised that the torsion rod provides the predominant biasing effect in response to relatively large angles of rotational displacement between the valve members from their neutral condition while the C-spring component provides the predominant biasing effect for relatively small angles of displacement between the valve members from their neutral condition so that the C-spring component mainly serves to give a positive centring or pre-load which efficiently returns the valve members to their neutral condition following a steering manoeuvre. With the aforementioned biasing means on the valve members, to achieve actuation of the power assistance valve and provide power assistance, it is necessary for the valve members to be displaced from their neutral condition by the application of a steering input torque which overcomes the pre-load of the biasing means.

For the purpose of providing speed proportional power assisted steering with the system as discussed above, it has hitherto been proposed, for example in our British Patent Specification No. 1,293,192, to provide a by-pass valve which communicates between the pump outlet and a fluid reservoir and which is responsive to vehicle speed so that the by-pass valve increasingly opens communication between the pump outlet and the reservoir as vehicle speed increases and conversely. By this arrangement the hydraulic fluid pressure differential between the pump outlet and the reservoir across the open centre power assistance valve decreases as vehicle speed increases ; therefore as vehicle speed increases there is an apparent decrease in fluid pressure available to actuate the power assistance ram and thereby the "feel" of the steering becomes heavier during a manoeuvre as the steering approaches what may be regarded as wholly manual steering characteristics. With such a speed proportional system, upon displacement of the open centre power assistance valve from its neutral condition in response to a steering input torque, the opposed chambers of the ram are closed from communication with each other while the expanding chamber maintains its communication with the pump outlet and the contracting chamber maintains its communication with the reservoir and in known steering systems it is recognised that this can have serious adverse consequences during normal steering of a vehicle at high speed where the by-pass valve is adjusted to a condition in which very little or no hydraulic pressure is available across the power assistance valve to assist in displacement of the ram. During this latter condition the expanding chamber of the ram may be subject to cavitation where the steering input torque from the driver causes manual displacement of the ram and by so doing draws-in hydraulic fluid into the ram chamber which is undergoing expansion with a result that undesirable steering characteristics or feel may be imparted to the driver during a normal steering manoeuvre at high speed (an example of such a normal manoeuvre may be regarded as where little driver effort or input torque is required to manoeuvre the vehicle around long shallow curves in the roadway or similar curves as may be followed during what may conventionally be regarded as safe overtaking at high speed). In an attempt to alleviate this problem known systems are of a relatively complex and expensive nature both in themselves and in the structure of their by-pass valves, for example such systems often employ a speed sensor that increases pump flow, momentarily, to alleviate cavitational effects which may otherwise occur during a steering manoeuvre of the vehicle when the power assistance valve is adjusted from its neutral condition. It is an object of the present invention to provide a vehicle power assisted steering system of the speed proportional type and which alleviates the problems discussed above and permits the use of a relatively simple and inexpensive by-pass valve.

## STATEMENT OF INVENTION & ADVANTAGES

A vehicle power assisted steering system comprising an hydraulic pump having a constant volume output ; an open centre power assistance valve communicating with said output and which is adjustable from a neutral condition in response to a steering input torque during a steering manoeuvre to control fluid flow from the pump to opposed chambers of a ram providing power assistance to assist said manoeuvre; a by-pass valve communicating between the pump outlet and a fluid reservoir and which is responsive to vehicle speed so that the by-pass valve is controlled to increasingly open communication between the pump outlet and the reservoir as vehicle speed increases and to decrease said communication as vehicle speed decreases ; the power assistance valve comprising valve members relative displacement between which from the neutral condition and in response to a steering input torque directs hydraulic fluid to actuate the ram for power assistance, said valve members in the neutral condition providing intercommunication between the pump, the chambers and the reservoir ; said valve members being biased to the neutral condition by biasing means which provides a pre-load that requires a valve actuating steering input torque to cause displacement of the power assistance valve from its neutral condition, and wherein said pre-load is related to steering characteristics of the vehicle so that when the vehicle is moving at high speed consistent with maximum fluid flow being permitted from the pump to the reservoir by way of the by-pass valve, a predetermined steering input torque provides for normal steering of the vehicle at the high speed and said predetermined steering input torque is less than the valve actuating steering input torque which is required to actuate the power assistance valve and provide power assistance.

The by-pass valve may be arranged so that when the vehicle is at high speed and maximum communication is provided by way of the by-pass valve from the pump outlet to the reservoir negligible or no fluid pressure will be available from the pump to actuate the power assistance ram. Under these conditions however and during normal steering of the vehicle at high speed, the steering will be wholly manual and since the opposed chambers of the ram are in communication with each other and with the fluid reservoir by way of the power assistance valve, any resistance caused by displacement of the ram in response to the steering manoeuvre may have negligible effect on the steering characteristics of the vehicle. What is regarded as high speed will usually differ from one vehicle to another but typically it may be considered as a speed in excess of 80 kilometers per hour. Normal steering of a vehicle at high speed is that which is regarded as acceptable for everyday manoeuvres as are likely to be experienced or expected during high speed travel along a motorway or the like (an example of normal steering may be where comparatively little effort is involved in steering the vehicle at high speed around long shallow curves in the roadway or along shallow curves as are generally followed during overtaking manoeuvres). Sometimes rapid steering correction motions are required, at comparatively low efforts, and it is on these occasions that the low fluid flows become troublesome. Having in mind the aforegoing it will also be appreciated that the predetermined steering input torque is also likely to differ from one vehicle to another and it is to be expected that this predetermined input torque will increase as the vehicle size increases ; for example an average family car or automobile is likely to have its predetermined steering input torque in the range 0.5 to 2.0 Newton metres, typically 0.8 Newton metres.

Preferably the valve actuating steering input torque as determined by the biasing means for the valve members and thereby the torque necessary to provide power assistance is slightly greater than the predetermined steering input torque. Although the valve actuating steering input torque will vary from vehicle to vehicle, it will typically be in the range 1.0 to 3.0 Newton metres ; for example with the range of the predetermined steering input torque mentioned above the corresponding valve actuating steering input torque would likely have the corresponding range 1.0 to 3.0 Newton metres, say 1 Newton metre for a predetermined input torque of 0.8 Newton metres.

Although the by-pass valve may be arranged so that at high speed there is no fluid pressure available for power assistance purposes as previously discussed, it will be appreciated that the by-pass valve may also be arranged so that a relatively small proportion of fluid pressure is available to provide some power assistance from the ram when the vehicle is travelling at high speed. By this latter arrangement, in the event that the predetermined steering input torque is exceeded (as may possibly occur during an emergency steering manoeuvre) and thereby the open centre power assistance valve is displaced from its neutral condition, possible cavitation effects in the expanding chamber of the ram are alleviated by the admission of fluid under pressure from the pump.

The by-pass valve is conveniently a spool valve, rotary valve or similar type of simple and inexpensive valve which merely opens and closes communication between the pump outlet and the reservoir in response to vehicle speed, the by-pass valve being adjusted by an appropriate speed responsive controller.

The valve members of the power assistance valve will usually be relatively displaceable in a rotational sense, for example as is well known in the art when the valve members comprise a valve rotor and a valve sleeve within which the rotor is received. The biasing means for relatively rotationally displaceable valve members of the power assistance valve will usually comprise either or both of a longitudinally extending torsion member (such as a rod or bar) or a C-spring component which reacts between those members and which are well known in the art being disclosed, for example, in our British Patent Specification No. 2,165,502 and our European Patent Publication No. 0067572.

DRAWINGS

One embodiment of a vehicle power assisted steering system constructed in accordance with the present invention will now be described, by way of example only, with reference to the accompanying illustrative drawings in which :

Figure 1 is a diagrammatic illustration of the system ;

Figure 2 is a longitudinal section through a typical open centre power assistance valve incorporated in the system, and

Figure 3 is a graph showing a typical steering input torque as sensed by the driver of a vehicle during a steering manoeuvre and how this may vary in accordance with vehicle speed by the system of the present invention.

DETAILED DESCRIPTION OF DRAWINGS

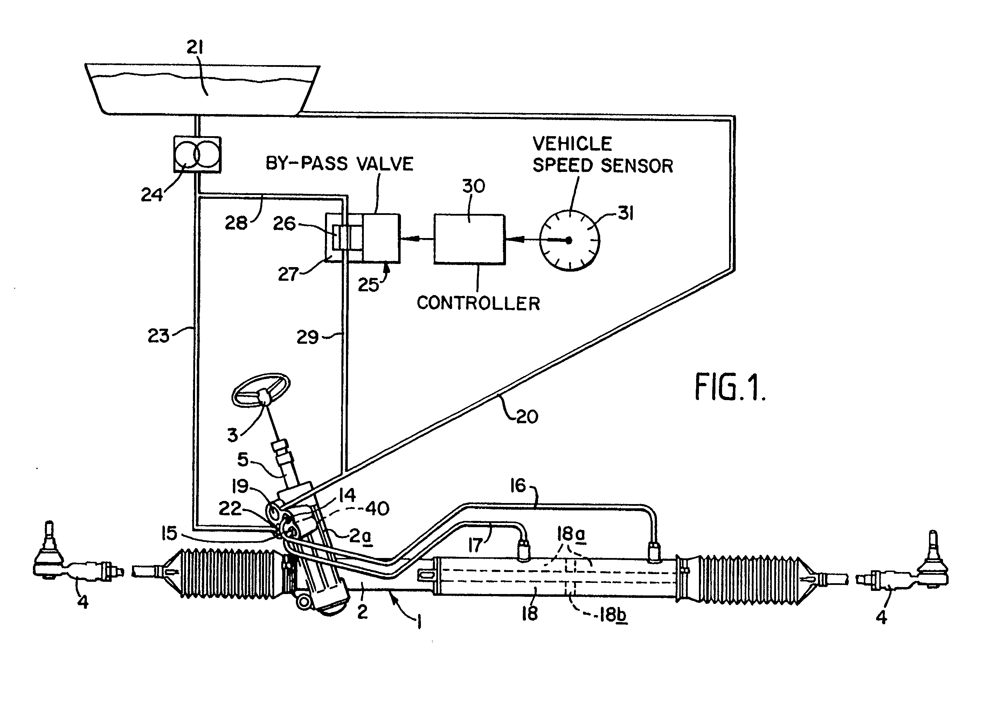

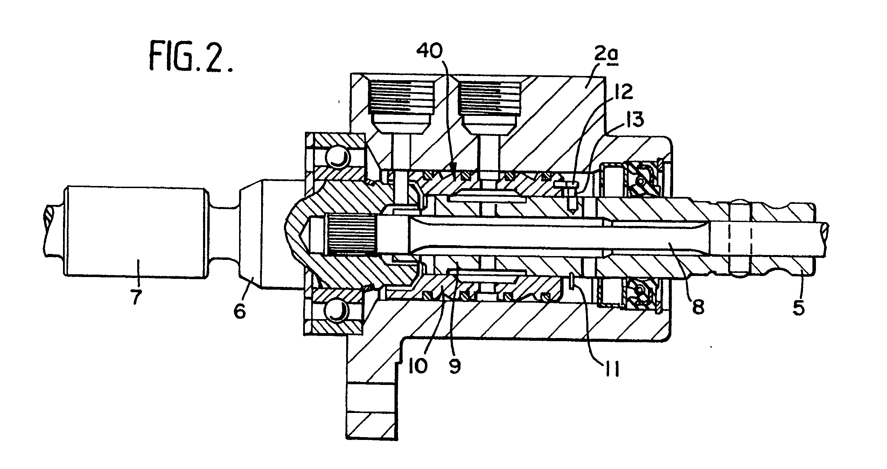

The power assisted steering system shown in Figure 1 includes a conventional rack and pinion, ram assisted type steering gear 1, the essential components, structure and basic operation of which will be well known to those familiar with the present art. More particularly, the gear 1 has a rack bar which is longitudinally displaceable in a housing 2. Within an extension 2a of the housing is rotatably mounted a pinion 7 which engages with the rack teeth so that rotation of the pinion by a steering wheel 3 and in response to a steering input torque displaces the rack bar longitudinally to effect a steering manoeuvre through conventional steering linkages 4. Within the housing extension 2a is provided a rotary type open centre power assistance valve 40 (as shown in Figure 2), the structure and operation of which is fully discussed in our British Patent Specification No. 2,165,502. Basically however the power assistance valve has a steering input shaft 5 coupled to the steering wheel 3. The shaft 5 is co-axially coupled to a shaft 6 of the pinion 7 through a torsion bar 8 so that the shafts 5 and 6 are capable of restricted rotation relative to each other. The input shaft 5 includes a valve rotor 9 which is received within a valve sleeve 10 rotatable with the pinion shaft 6. The torsion bar 8 rotationally biases the valve members 9 and 10 relative to each other and to a neutral condition of the open centre valve. Mounted on the input shaft 5 is a C-shaped spring 11, the mouth of which reacts between pegs 12 and 13 on the valve sleeve 10 and valve rotor 9 respectively so that when the valve rotor and valve sleeve are displaced from their neutral condition, the mouth of the C-shaped spring 11 opens and the reaction of the spring provides a biasing force additional to that of the torsion bar 8 to restore the rotary valve to its neutral condition. The biasing force provided by the torsion bar tends to predominate for relatively large angular displacements between the valve rotor and sleeve from the neutral condition while the biasing force provided by the C-spring 11 tends to predominate for relatively small angular displacement between the valve rotor and sleeve from the neutral condition (so that the latter ensures a positive centering of the valve in its neutral condition and, predominantly, the C-spring 11 is pre-loaded so that it is this pre-load which has to be overcome before the rotary valve can be displaced from its neutral condition). The open centre valve operates in conventional manner and, as can be seen from Figure 1, has outlet ports 14 and 15 which communicate through conduits 16 and 17 respectively with opposed chambers 18a of a double acting power assistance ram 18b mounted within a ram chamber section 18 of the rack bar housing. The ram 18b is coupled to the rack bar in known manner so that its actuation will assist in longitudinal displacement of the rack bar. The open centre valve also has an exhaust port 19 which communicates by way of a conduit 20 with a hydraulic fluid reservoir 21 and an inlet port 22 which communicates by way of a conduit 23 with the outlet of a constant volume output pump 24 which draws hydraulic fluid from the reservoir 21.

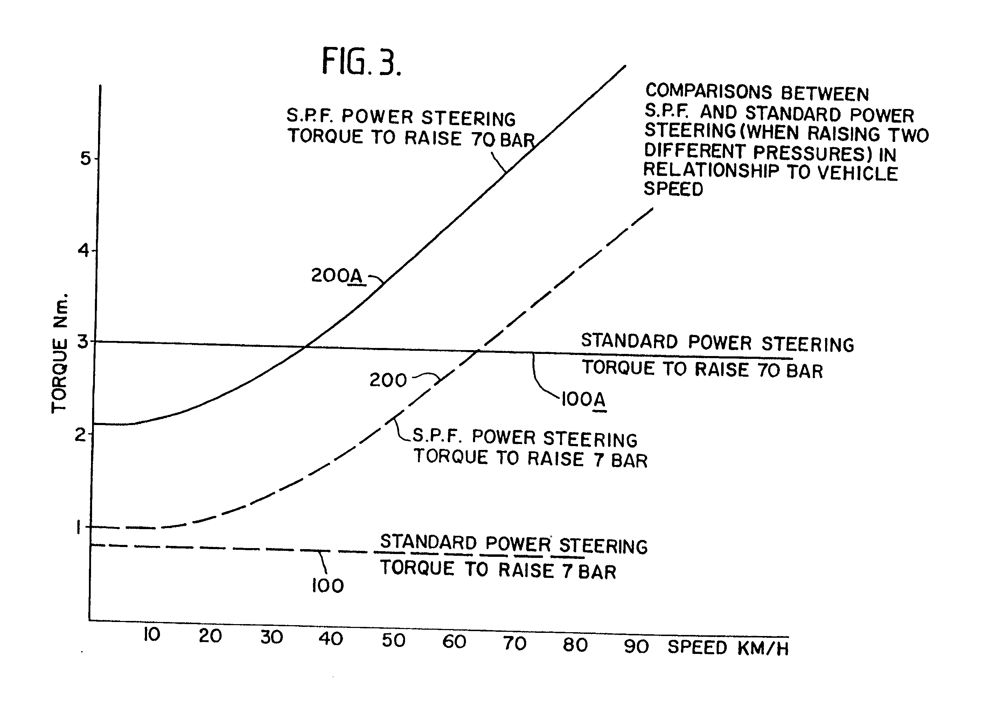

In its open centre neutral condition, the power assistance valve 40 provides inter-communication between the output from the pump 24, the two opposed chambers 18a of the power assistance ram and the reservoir 21 so that the system is of the open centre/open return type and hydraulic fluid can circulate freely from the pump to the reservoir and between the chambers 18a. When a steering input torque is applied to the steering wheel 3 during a steering manoeuvre and which is adequate to rotationally displace the valve rotor 9 relative to the valve sleeve 10 against the pre-load provided by the biasing spring 11 (and to a lesser extent by the torsion bar 8) so that the power assistance valve is displaced from its neutral condition, fluid flow is directed from the pump output to one (expanding) chamber 18a of the power assistance ram while that chamber of the ram is closed to communication with the reservoir 21 and the other (contracting) chamber 18a of the ram maintains its communication with the reservoir 21 but is closed to communication with the expanding chamber of the ram. Accordingly the ram is displaced by fluid pressure in its expanding chamber to assist in longitudinal displacement of the rack bar in a direction consistent with that intended by rotation of the steering wheel 3. For standard power steering which is not varied in proportion to vehicle speed, the power assistance which is provided will, substantially, be constant for any steering manoeuvre irrespective of vehicle speed and when the steering input torque which is applied is sufficient to displace the open centre valve from its neutral condition. This latter arrangement is indicated by the line 100 and may occur when the open centre valve is displaced slightly from its neutral condition (so that the full pump pressure is not required to actuate the ram). The line 100 of the graph in Figure 3 indicates where the open centre valve permits only 7 Bar to be directed to the ram and the ordinate shows the torque in Newton metres which has to be applied to rotate the input shaft 5 to effect a steering manoeuvre while the abscissa shows the vehicle speed in kilometres per hour. The line 100A of the graph in Figure 3, again indicates the relationship between torque and vehicle speed similarly to line 100 but when there is a resistance to a steering manoeuvre and the open centre valve is displaced fully, or to a maximum extent, from its neutral condition so that the full pump pressure of, say 70 Bar, is available to actuate the ram.

For the speed proportional steering system of the present invention a by-pass valve 25 is provided which opens and closes communication between the pump output 24 and the reservoir 21, conveniently being connected in parallel with the open centre power assistance valve 40. The by-pass valve is a simple spool valve comprising a spool 26 which is axially displaceable in a spool housing 27 to control communication between a conduit 28 from the output of pump 24 and a conduit 29 which communicates with the conduit 20 and therethrough with the reservoir 21. The spool 26 is axially adjusted by a controller 30 and in response to variations in vehicle speed from a vehicle speed sensor indicated at 31. The controller 30 and sensor 31 may be of a mechanical, electrical/electronic or fluid pressure operated kind as is well known in the art, a typical example of which is the centrifugal type controller which is fully discussed in our British Patent No. 1,293,192. The spool 26 is adjusted axially by the controller and in response to variations in vehicle speed from a condition when the vehicle is stationary where the conduit 28 is closed to communication with the conduit 29 as shown in Figure 1 to a condition when the vehicle is travelling at high speed (say in excess of 96 kph) where the conduit 28 is fully open to communication with the conduit 29. It will be appreciated that the spool 26 may be displaced progressively between the aforementioned conditions while the opening and closing of communication between the conduits 28 and 29 (and thereby the proportion of fluid flow from the pump 24 direct to the reservoir 21 which is permitted by way of the by-pass valve) will be determined by appropriate porting of the valve 25 to provide required characteristics for variations in the fluid pressure differential which is developed across the open centre valve 40 between the conduits 23 and 20 as compared with vehicle speed. When the vehicle is stationary or moving slowly, say at a speed less than 10 kph, the by-pass valve 25 closes communication between the conduits 28 and 29 and the full pressure flow from the pump 24 is available to actuate the power assistance ram and provide maximum power assistance when the open centre valve 40 is displaced from its neutral condition. As vehicle speed increases and the by-pass valve 25 progressively opens communication between the conduits 28 and 29, a reducing fluid pressure differential from the pump 24 is available to actuate the power assistance ram 18b so that the power assistance which is provided progressively decreases (and thereby a progressively greater input torque has to be applied to the steering wheel 3 to effect a steering manoeuvre) and the system approaches the characteristics which would substantially correspond to those of a wholly manual system.

The by-pass valve 25 may be such that when the vehicle is at high speed and maximum communication is provided between the conduits 28 and 29, a negligible or zero fluid pressure differential is available from the pump 24 to actuate the power assistance ram and maximum input torque has to be applied to the steering wheel 3 to effect a steering manoeuvre without power assistance (so the system may provide wholly manual steering characteristics). In this latter condition and when the open centre valve is displaced from its neutral condition, the opposed chambers 18a of the ram do not inter-communicate directly through the open centre valve 40 while one of those chambers communicates with the conduit 23 and the other communicates with the conduit 20. As a consequence of this arrangement and where there is no, or negligible, fluid pressure differential provided by the pump 24 across the open centre valve between the conduits 23 and 20, it will be apparent that during a steering manoeuvre and in the absence of power assistance when the open centre valve is displaced from its neutral condition, the power assistance ram 18b is displaced manually upon rotation of the shaft 5 and thereby the expanding pressure chamber 18a of the ram may be subject to cavitation to draw-in hydraulic fluid from the conduit 23. This cavitational effect on the ram may result in adverse steering characteristics or feel to the driver. The lines 200 and 200A in the graph of Figure 3 indicates a typical manner in which the input torque, which has to be applied to the steering wheel 3 to effect a steering manoeuvre, may vary in proportion to vehicle speed. More particularly the line 200 represents the relationship between input torque and vehicle speed when there is a small resilience to steering and the power assistance valve is displaced to a small extent from its neutral condition to provide a pressure of 7 Bar from the pump to actuate the power assistance ram. Line 200A represents the aforementioned relationship where there is a large resistance to steering and the power assistance valve is displaced to a large or maximum extent from its neutral condition to provide maximum pressure of, say, 70 Bar from the pump to actuate the power assistance ram. When sufficient input torque is applied to displace the open centre valve 40 from its neutral condition, the pressure which becomes available from the pump to actuate the ram will, in the present example, be from 7 to 70 Bar dependent on the resistance to the steering. Consequently the power assistance which is provided will be represented by a position in the graph of Figure 3 that is located on or between the two lines 200 and 200A. The input torque which may have to be applied to continue the steering manoeuvre and maintain the open centre valve displaced from its neutral condition progressively increases as vehicle speed increases.

From the aforegoing discussion it will be realised that the disadvantageous effect caused by cavitation in the power assistance ram will predominantly occur when the vehicle is at high speed and sufficient input torque is applied to the steering wheel to displace the open centre valve from its neutral condition, the present invention aims to alleviate these disadvantages.

It is recognised that when a given vehicle is travelling at high speed the forces to which it is subjected, particularly the resistance encountered to displacement of steerable road wheels of the vehicle during a normal steering manoeuvre, will require the application of a predetermined torque by the driver to rotate the input shaft 5. This predetermined steering input torque would be that compatible with the vehicle travelling at high speed and being steered smoothly to follow shallow curves as are likely to be experienced or expected during normal, safe motorway driving or the like where little effort is involved to direct the vehicle around long shallow curves in the roadway or in overtaking manoeuvres. This predetermined input torque will naturally differ from one vehicle to another, principally in accordance with the size of the vehicle, but generally an average family car will have its predetermined steering input torque in the range 0.5 to 2.0 Newton metres, the most likely figure being approximately 0.8 Newton metres. Having this in mind, if the biasing force applied by the torsion bar 8 and C-spring 11 to urge the open centre valve to its neutral condition necessitates in the requirement of a valve actuating steering input torque to actuate the power assistance valve (by displacing the valve sleeve and valve rotor from their neutral condition) which is greater than the aforementioned predetermined steering input torque, then for normal steering of the vehicle at high speed the open centre valve will remain in its neutral condition ; the cavitational effects will therefore be alleviated since the opposed chambers 18a of the ram will communicate with each other through the open centre valve and hydraulic fluid may be displaced readily between those chambers. Accordingly by the present invention the C-spring 11 is pre-loaded to meet the requirements specified immediately above. For the average family car as aforementioned, the biasing provided by the torsion bar 8 and C-spring 11 to urge the open centre valve to its neutral condition would typically require a valve actuating steering input torque to displace the valve from its neutral condition in the range 1.0 to 3.0 Newton metres (to correspond with the aforementioned range for the predetermined steering input torque). With the example given for a predetermined steering input torque of 0.8 Newton metres, the valve actuating steering input torque would be approximately 1.0 Newton metres. In the example of the speed proportional steering shown by the line 200 of Figure 3 it may be assumed that the predetermined steering input torque is 0.8 Newton metres and it will be seen that to achieve any measure of power assistance for a steering manoeuvre it is necessary to provide a valve actuating steering input torque of at least 1 Newton metre ; this condition will rapidly be reached to provide full power assistance when the vehicle is stationary or moving slowly during a parking manoeuvre and the resistance to turning movement of the steerable road wheels is likely to be considerable. As vehicle speed increases the power assistance is less readily available with the apparent effect that the power assistance progressively decreases as vehicle speed increases. To take advantage of any power assistance it is nevertheless always necessary to provide an input torque of at least 1 Newton metre to displace the open centre valve 25 from its neutral condition. The line 100 in Figure 3 indicates that with standard power steering an input torque of approximately 0.6 Newton metres is required to actuate the open centre valve so that power assistance would readily be available even during normal steering at high speed.

It is appreciated that when the vehicle is travelling at high speed there is likely to be the occurrence of abnormal steering, say during an emergency or hazardous manoeuvre where the driver may suddenly impart considerable torque to the steering wheel so that the valve actuating steering input torque is exceeded and the open centre valve is displaced from its neutral condition. In this latter event the power assistance ram 18b may exhibit the cavitational effects previously discussed but in these circumstances it is expected that the resultant change in feel of the steering system will have negligible effect upon the driver of the vehicle in comparison with the effect from the overall driving conditions which prevail.

If required the characteristics of the by-pass valve 25 may be determined so that when the vehicle is at high speed and maximum communication is provided between the conduits 28 and 29, there is nevertheless a resistance to fluid flow through the valve 25 and the by-pass valve thereby maintains a relatively small pressure differential across the open centre valve 40 between the conduits 23 and 20. By this arrangement, if the power assistance valve 40 is actuated during a steering manoeuvre at high speed some fluid pressure will be available to enter the expanding pressure chamber 18a of the power assistance ram and thereby alleviate the cavitational effects. Even with this latter possibility however, it will be realised that the simple form of by-pass valve 25 can be utilised.

In a modification of the system (not shown) the by-pass valve 25 is relocated from its position shown in Figure 1 to communicate between the conduits 16 and 17 of the ram chambers 18a (that is the conduits 28 and 29 of the by-pass valve are re-connected to communicate with the conduits 16 and 17 respectively or directly with the inlet/outlet ports of the respective ram chambers 18a). With such a modification, and bearing in mind that the system is of the open centre type whereby at least one of the two ram chambers 18a will always communicate with the reservoir 21 (through the conduit 20 and either or both conduits 16 and 17 as the case may be depending upon the adjustment of the valve 40), the outlet (conduit 23) from the pump 24 will communicate with the reservoir 21 by way of the valve 40 (a) when the valve is in its neutral condition, directly to the conduit 20 or by way of the by-pass valve to the conduit 20 ; and (b) when the valve 40 is displaced from its neutral condition, by way of the by-pass valve through conduits 17 and 16 successively or 16 and 17 successively (as the case may be) to the conduit 20. Such a re-location of the by-pass valve 25 is advantageous to alleviate the possibility of the ram chambers 18a from emptying of hydraulic fluid since such fluid as is available for the ram can be shared between its chambers through the interconnecting by-pass valve.

## Claims

1. A vehicle power assisted steering system comprising an hydraulic pump (24) having a constant volume output ; an open centre power assistance valve (40) communicating with said output and which is adjustable from a neutral condition in response to a steering input torque during a steering manoeuvre to control fluid flow from the pump (24) to opposed chambers (18a) of a ram providing power assistance to assist said manoeuvre ; a by-pass valve (25) communicating between the pump outlet and a fluid reservoir (21) and which is responsive to vehicle speed so that the by-pass valve (25) is controlled to increasingly open communication between the pump outlet and the reservoir as vehicle speed increases and to decrease said communication as vehicle speed decreases ; the power assistance valve (40) comprising valve members (9, 10) relative displacement between which from the neutral condition and in response to a steering input torque directs hydraulic fluid to actuate the ram (18b) for power assistance, said valve members in the neutral condition providing intercommunication between the pump (24), the chambers (18a) and the reservoir (21) ; said valve members (9, 10) being biased to the neutral condition by biasing means (8, 11) which provides a pre-load that requires a valve actuating steering input torque to cause displacement of the power assistance valve (40) from its neutral condition, and wherein said pre-load is related to steering characteristics of the vehicle so that when the vehicle is moving at high speed consistent with maximum fluid flow being permitted from the pump to the reservoir by way of the by-pass valve (25), a predetermined steering input torque provides for normal steering of the vehicle at the high speed and said predetermined steering input torque is less than the valve actuating steering input torque which is required to actuate the power assistance valve and provide power assistance.

2. A system as claimed in claim 1 in which the by-pass valve (25) is arranged so that when the vehicle is at high speed and maximum communication is provided by way of the by-pass valve from the pump outlet to the reservoir, negligible or no fluid pressure differential is available from the pump (24) to actuate the power assistance ram.

3. A system as claimed in either claim 1 or claim 2 in which the valve members (9, 10) are rotationally displaceable relative to each other and the biasing means comprises at least one of an elongated torsion member (8) or C-spring component (11) which reacts between said valve members.

4. A system as claimed in any one of the preceding claims in which the valve actuating steering input torque is in the range 1.0 to 3.0 Newton metres.

5. A system as claimed in any one of the preceding claims in which the predetermined steering input torque is in the range 0.5 to 2.0 Newton metres for normal steering of a vehicle in excess of 80 kilometres per hour.

6. A system as claimed in any one of the preceding claims in which the valve actuating steering input torque is substantially 1 Newton metre and the predetermined steering input torque is substantially 0.8 Newton metres.

7. A system as claimed in any one of the preceding claims in which the by-pass valve (25) comprises a spool valve relative axial displacement between a spool (26) and a housing (27) of which opens or closes communication between the pump outlet and the reservoir and said axial displacement is adjusted by a vehicle speed responsive controller (30).

8. A system as claimed in any one of the preceding claims in which the pump outlet communicates directly with the by-pass valve (25) and therethrough with the reservoir (21).

9. A system as claimed in any one of claims 1 to 7 in which the opposed chambers (18a) of the ram intercommunicate by way of said by-pass valve (25) and the pump outlet communicates with the fluid reservoir (21) by way of said open centre power assistance valve (40) and said by-pass valve (25) successively.

**Patentansprüche**

1. Fahrzeug-Servolenksystem, enthaltend eine hydraulische Pumpe (24) mit einem Konstantvolumen-Ausgang ; ein mittenoffenes Servoventil (40), welches mit dem Ausgang in Verbindung steht und von einer Neutralstellung aus dazu verstellt werden kann, in Reaktion auf eine Eingangs-Lenk-Drehkraft während eines Lenkmanövers einem Strömungsmittelfluß von der Pumpe (24) zu einander entgegengesetzten Kammern (18a) eines antriebserzeugenden Kraftunterstützers zu lenken, um das Manöver zu unterstützen ; ein Bypassventil (25), welches eine Verbindung zwischen dem Pumpenauslaß und einem Strömungsmittelreservoir (21) bildet und auf die Fahrzeuggeschwindigkeit anspricht, so daß das Bypassventil (25) gesteuert wird, zunehmend die Verbindung zwischen dem Pumpenauslaß und dem Reservoir zu öffnen, wenn die Fahrzeuggeschwindigkeit zunimmt, und die Verbindung zu verringern, wenn sich die Fahrzeuggeschwindigkeit verringert ; worin das Servoventil (40) Ventilelemente (9, 10) enthält, bei denen eine relative Versetzung zwischen ihnen von der Neutralstellung und in Reaktion auf eine Eingangs-Lenk-Drehkraft ein Hydraulikmittel darauf richtet, den Antrieb (18b) zur Kraftunterstützung zu betätigen, wobei die Ventilelemente in der Neutralstellung eine wechselseitige Verbindung zwischen der Pumpe (24), den Kammern (18a) und dem Reservoir (21) liefern ; worin die Ventilelemente (9, 10) in die Neutralstellung durch Vorspannmittel (8, 11) vorgespannt sind, welche eine Vorspannung liefern, die eine Ventilbetätigungs-Eingangs-Lenk-Drehkraft erfordert, um eine Versetzung des Servoventils (40) aus seiner Neutralstellung zu bewirken, und worin die Vorspannung so auf die Lenkeigenschaften des Fahrzeugs bezogen ist, daß, wenn sich das Fahrzeug entsprechend eines maximal möglichen Strömungsmittelflusses von der Pumpe über das Bypassventil (25) zu dem Reservoir mit hoher Geschwindigkeit bewegt, eine vorbestimmte Eingangs-Lenk-Drehkraft zur normalen Lenkung des Fahrzeugs bei hoher Geschwindigkeit dient und die vorbestimmte Eingangs-Lenk-Drehkraft kleiner ist als die Ventilbetätigungs-Eingangs-Lenk-Drehkraft, welche erforderlich ist, um das Servoventil zu betätigen und die Kraftunterstützung zu liefern.

2. System nach Anspruch 1, bei welchem das Bypassventil (25) so angeordnet ist, daß, wenn das Fahrzeug auf hoher Geschwindigkeit ist und eine maximale Verbindung über das Bypassventil von dem Pumpenauslaß zu dem Reservoir besteht, vernachlässigbar wenig oder kein Strömungsmittel-Druckgefälle von der Pumpe (24) zur Betätigung des Servoantriebs zur Verfügung steht.

3. System nach Anspruch 1 oder Anspruch 2, bei welchem die Ventilelemente (9, 10) drehend relativ zueinander versetzbar sind und die Vorspannmittel zumindest eines von einem länglichen Torsionselement (8) oder einem C-Feder-Bauteil (11) enthalten, das zwischen den Ventilelementen wirkt.

4. System nach einem der vorstehenden Ansprüche, bei welchem die Ventilbetätigungs-Eingangs-Lenk-Drehkraft in dem Bereich von 1,0 bis 3,0 Newtonmetern liegt.

5. System nach einem der vorstehenden Ansprüche, bei welchem die vorbestimmte Eingangs-Lenk-Drehkraft in dem Bereich von 0,5 bis 2,0 Newtonmetern für die normale Lenkung eines Fahrzeugs oberhalb von 80 Kilometern pro Stunde liegt.

6. System nach einem der vorstehenden Ansprüche, bei welchem die Ventilbetätigungs-Eingangs-Lenk-Drehkraft im wesentlichen 1 Newtonmeter beträgt und die vorbestimmte Eingangs-Lenk-Drehkraft im wesentlichen 0,8 Newtonmeter beträgt.

7. System nach einem der vorstehenden Ansprüche, bei welchem das Bypassventil (25) ein Steuerventil aufweist, bei dem eine relative axiale Versetzung zwischen einem Steuerelement (26) und einem Gehäuse (27) die Verbindung zwischen dem Pumpenauslaß und dem Reservoir öffnet oder schließt und die axiale Versetzung durch eine auf die Fahrzeuggeschwindigkeit reagierende Steuerung (30) eingestellt wird.

8. System nach einem der vorstehenden Ansprüche, bei welchem der Pumpenauslaß direkt mit dem Bypassventil (25) und darüber mit dem Reservoir (21) in Verbindung steht.

9. System nach einem der Ansprüche 1 bis 7, bei welchem die einander entgegengesetzten Kammern (18a) des Antriebs über das Bypassventil (25) wechselseitig miteinander in Verbindung stehen und der Pumpenauslaß nacheinander über das mittenoffene Servoventil (40) und das Bypassventil (25) mit dem Strömungsmittelreservoir (21) in Verbindung steht.

**Revendications**

1. Système de direction assistée pour véhicule comportant une pompe hydraulique (24) à sortie à volume constant ; une valve d'assistance (40) à centre ouvert communiquant avec ladite sortie et pouvant être réglée à partir d'une condition neutre en réponse à un couple d'entrée de direction durant une manoeuvre de direction pour commander l'écoulement d'un fluide depuis la pompe (24) vers des chambres opposées (18a) d'un vérin fournissant une assistance pour aider à ladite manoeuvre ; une valve (25) de dérivation communiquant entre la sortie de la pompe et un réservoir (21) de fluide et qui réagit à la vitesse du véhicule afin que la valve (25) de dérivation soit commandée pour ouvrir progressivement la communication entre la sortie de la pompe et le réservoir lorsque la vitesse du véhicule augmente et pour diminuer ladite communication lorsque la vitesse du véhicule diminue ; la valve (40) d'assistance comportant des éléments de valve (9, 10) dont un déplacement relatif à partir de la condition neutre et en réponse à un couple d'entrée de direction dirige un fluide hydraulique pour actionner le vérin (18b) pour l'assistance, lesdits éléments de valve dans la condition neutre établissant une intercommunication entre la pompe (24), les chambres (18a) et le réservoir (21) ; lesdits éléments de valve (9, 10) étant rappelés vers la condition neutre par des moyens de rappel (8, 11) qui exercent une précharge qui demande à un couple d'entrée de direction actionnant la valve de provoquer un déplacement de la valve d'assistance (40) à partir de sa condition neutre, ladite précharge étant liée aux caractéristiques de direction du véhicule afin que, lorsque le véhicule se déplace à une vitesse élevée en conformité avec un écoulement maximal de fluide permis depuis la pompe vers le réservoir par l'intermédiaire de la valve (25) de dérivation, un couple prédéterminé d'entrée de direction produise une manoeuvre normale de direction du véhicule à la vitesse élevée et que ledit couple prédéterminé d'entrée de direction soit inférieur au couple d'entrée de direction actionnant la valve, qui est demandé pour actionner la valve d'assistance et fournir une assistance.

2. Système selon la revendication 1, dans lequel la valve (25) de dérivation est disposée de manière que, lorsque le véhicule est à une vitesse élevée et qu'une communication maximale est établie au moyen de la valve de dérivation depuis la sortie de la pompe jusqu'au réservoir, une différence de pression de fluide négligeable ou nulle soit disponible à partir de la pompe (24) pour actionner le vérin d'assistance.

3. Système selon la revendication 1 ou la revendication 2, dans lequel les éléments (9, 10) de valve peuvent être déplacés en rotation l'un par rapport à l'autre et les moyens de rappel comprennent au moins l'un d'un élément allongé (8) de torsion ou d'une pièce (11) à ressort en C qui réagit entre lesdits éléments de valve.

4. Système selon l'une quelconque des revendications précédentes dans lequel le couple d'entrée de direction actionnant la valve est dans la gamme de 1,0 à 3,0 newtons-mètres.

5. Système selon l'une quelconque des revendications précédentes dans lequel le couple prédéterminé d'entrée de direction est dans la gamme de 0,5 à 2,0 newtons-mètres pour une manoeuvre de direction normale d'un véhicule dépassant 80 kilomètres/heure.

6. Système selon l'une quelconque des revendications précédentes, dans lequel le couple d'entrée de direction actionnant la valve est sensiblement de 1 newton-mètre et le couple prédéterminé d'entrée de direction est sensiblement de 0,8 newton-mètre.

7. Système selon l'une quelconque des revendications précédentes dans lequel la valve (25) de dérivation comprend une valve à tiroir dans laquelle un déplacement axial relatif entre un tiroir (26) et un corps (27) ouvre ou ferme une communication entre la sortie de la pompe et le réservoir et ledit déplacement axial est réglé par un dispositif (30) de commande sensible à la vitesse du véhicule.

8. Système selon l'une quelconque des revendications précédentes dans lequel la sortie de la pompe communique directement avec la valve (25) de dérivation et à travers elle avec le réservoir (21).

9. Système selon l'une quelconque des revendications 1 à 7, dans lequel les chambres opposées (18a) du vérin communiquent entre elles au moyen de ladite valve (25) de dérivation et la sortie de la pompe communique avec le réservoir (21) de fluide au moyen de ladite valve d'assistance (40) à centre ouvert et de ladite valve (25) de dérivation, successivement.

FIG.1.

EP 0 336 553 B1

FIG.2.

EP 0 336 553 B1

# FIG. 3.

S.P.F. POWER STEERING
TORQUE TO RAISE 70 BAR

COMPARISONS BETWEEN
S.P.F. AND STANDARD POWER
STEERING (WHEN RAISING TWO
DIFFERENT PRESSURES) IN
RELATIONSHIP TO VEHICLE
SPEED

200A

STANDARD POWER STEERING
TORQUE TO RAISE 70 BAR

200

100A

S.P.F. POWER STEERING
TORQUE TO RAISE 7 BAR

STANDARD POWER STEERING
TORQUE TO RAISE 7 BAR

100

TORQUE Nm.

5

4

3

2

1

10  20  30  40  50  60  70  80  90  SPEED KM/H

EP 0 336 553 B1